# EUROPÄISCHE PATENTSCHRIFT

(11) **EP 2 329 161 B1**
(45) Veröffentlichungstag und Bekanntmachung des Hinweises auf die Patenterteilung: **17.05.2017**
(21) Anmeldenummer: 09778711.3
(22) Anmeldetag: 25.09.2009
(51) Int. Cl.: F16D 3/38

(54) **KREUZGELENKANORDNUNG FÜR EINE GELENKWELLE**
UNIVERSAL JOINT ARRANGEMENT FOR AN ARTICULATED SHAFT
SYSTÈME DE JOINT DE CARDAN POUR UN ARBRE DE TRANSMISSION

(30) Priorität: 29.09.2008 DE 102008049348
(43) Veröffentlichungstag der Anmeldung: 08.06.2011
(73) Patentinhaber: Voith Patent GmbH, 89522 Heidenheim (DE)
(72) Erfinder: GRAWENHOF, Peter, 89547 Dettingen (DE); RITTER, Simon, 89441 Medlingen (DE)
(74) Vertreter: Dr. Weitzel & Partner
(86) Internationale Anmeldenummer: PCT/EP2009/006918
(87) Internationale Veröffentlichungsnummer: WO 2010/034501

(56) Entgegenhaltungen:
- EP-A- 1 783 384
- EP-A- 1 795 772
- EP-A- 1 795 773
- WO-A-80/01827
- WO-A-2005/017376
- WO-A-2008/037817
- DE-U1- 7 629 846
- DE-U1- 29 920 839

## Beschreibung

Die Erfindung betrifft eine Kreuzgelenkanordnung für eine Gelenkwelle, insbesondere eine Schwerlastgelenkwelle mit den im Oberbegriff von Anspruch 1 näher bezeichneten Merkmalen. Gelenkwellen dieser Art sind insbesondere aus EP1795773, EP1783384, DE29920839U, EP1795772, WO2005/017376, WO80/01827, DE7629846U und WO2008/037817 bekannt. Gelenkwellen sind zur Übertragung von Drehmomenten allgemein bekannt und üblich. Die Gelenke oder auch Kardangelenke sind dabei typischerweise aus einem Zapfenkreuz und zwei um 90 Grad zueinander verdrehten Gabeln ausgebildet, wobei jeder Zapfen des Zapfenkreuzes in einer Gabelbohrung der jeweiligen Achse der Gabeln angeordnet ist. Um mit den Gelenkwellen, insbesondere mit Schwerlastgelenkwellen, entsprechend hohe Drehmomente dauerhaft zuverlässig zu übertragen, sind die Zapfen in den Gabelbohrungen entsprechend gelagert, da es während des Betriebs zu einer ständigen Schwenkbewegung der Zapfen gegenüber den Gabelbohrungen kommt.

Insbesondere bei Schwerlastgelenkwellen, welche insbesondere in Walzwerks und Hauptantrieben beim Walzen von Stahl vorgesehen sind, werden sehr hohe Drehmomente in einer Größenordnung von mehreren tausend Kilonewtonmetern übertragen. Um dies bewerkstelligen zu können, sind die Zapfen dabei typischerweise mit Radiallagern und Axiallagern in den Gabelbohrungen gelagert. Insbesondere den Axiallagern soll dabei nachfolgend eine entsprechende Aufmerksamkeit gewidmet werden.

Die übliche Art und Weise der Lagerung besteht darin, dass die axiale Lagerung über Gleitlagerelemente oder Wälzlagerelemente erfolgt, welche gegenüber einem von außen in die Gabelbohrung eingebrachten Sicherungsring abgestützt werden.

Aus der EP 0 785 370 A1 ist eine Alternative bekannt, bei der die Lagerung der Zapfen sich an einem Anlagebund im Außenbereich der jeweiligen Gabelbohrung abstützt. Bei der Montage wird das Zapfenkreuz entsprechend in die Gabelbohrungen eingefädelt, dann erfolgt das Einbringen der Lageranordnung von außen, bevor die Gabelbohrung über einen entsprechenden Deckel verschlossen wird.

Alternativ hierzu kann die Gabelbohrung auch in Form eines Sacklochs ausgebildet sein. Hierzu wird auf die DE 299 20 839 U1 verwiesen. Bei einer derartigen Anordnung, welche eine geteilte Gabel erfordert, wird die Lageranordnung entsprechend auf die Zapfen des Zapfenkreuzes aufgesteckt, bevor diese in die Gabelbohrung eingebracht werden.

All diese Ausgestaltungen haben jedoch zwei Nachteile. Die Abstützung des axialen Lagers erfolgt entweder an einem Sicherungsring, einem Anlagebund oder einem Lagerdeckel beziehungsweise bei der Sacklochbohrung der Gabelbohrung in dem einstückig mit der Gabel ausgebildeten Deckelbereich. Da bei Gelenkwellen, insbesondere Schwerlastgelenkwellen, jedoch sehr hohe Kräfte auftreten, benötigt man für diese Abstützung des Axiallagers in dem einer Drehachse der Gelenkwelle abgewandten Bereich der Gabelbohrung vergleichsweise hohe Materialstärken und damit entsprechend viel Bauraum, insbesondere auch weil die Gabeln, welche nicht über den Durchmesser der eigentlichen Gelenkwelle hinausragen dürfen, in diesen Bereichen rund ausgeführt sind, so dass in dem für die Abstützung genutzten Bereich des "Deckels" ohnehin eine eher geringe Materialstärke zur Verfügung steht.

Die benötigte Materialstärke begrenzt jedoch den Bereich, in dem sich die Radiallager des jeweiligen Zapfens erstrecken. Da ein möglichst weit außen liegender Bereich der Radiallager jedoch hinsichtlich der Hebelwirkung besonders günstig wäre, stellt diese Axiallagerung somit einen Festigkeitsnachteil für die Axiallagerung an sich und damit verbunden auch einen Nachteil für die entsprechende Hebelwirkung in der Radiallagerung dar.

Ferner soll hier noch auf zwei weitere Schriften zum Stand der Technik verwiesen werden, nämlich die DE 10 2005 058 742 A1 und die DE 10 2005 058 743 A1. In beiden Schriften sind Axiallageranordnungen beschrieben, welche durch eine spezielle Ausgestaltung nur in bestimmten Bereichen tragend ausgebildet sind, während andere Bereiche über Ausnehmungen oder teilelastische Abschnitte gebildet werden. Damit ist das Axiallager nur in den Bereichen tragend ausgebildet, in denen bei entsprechender Einbaulage im Betrieb vergleichsweise geringe Relativbewegungen zwischen Zapfen und Gabelbohrung auftreten, so dass die Lagerbeanspruchung der Axiallager deutlich reduziert und damit die Lebensdauer der Gelenkwelle vergrößert werden kann.

Es ist nun die Aufgabe der Erfindung, die oben genannten Nachteile bezüglich der Axiallagerung zu verringern und eine Kreuzgelenkanordnung zu schaffen, welche insbesondere auch bei Schwerlastgelenkwellen eine höchstmögliche Lebensdauer bei minimalem Bauraum gewährleistet.

Erfindungsgemäß wird diese Aufgabe durch die im kennzeichnenden Teil von Anspruch 1 genannten Merkmale gelöst.

Die erfindungsgemäße Ausgestaltung verlagert nicht nur das Axiallager, sondern auch dessen Abstützung an der Gelenkwellenbohrung auf die Innenseite, also die der Drehachse der Gelenkwelle zugewandten Seite der Gabelbohrung. Dadurch wird ein minimaler Weg zwischen Krafteinleitung und Abstützung des Axiallagers realisiert, welcher eine äußerst robuste Axiallagerabstützung ermöglicht, und welcher auf zusätzliche Anlegeborde zur Axialkraftabstützung verzichten kann. Der gewonnene Bauraum kann vorteilhaft zur Erhöhung der Radiallagerkapazität genutzt werden.

Erfindungsgemäß kommt es zu einem minimalen Abstand zwischen der Abstützung des Axiallagers und der Krafteinleitung auf die Gabel. Dadurch wird die Kraft über eine äußerst kurze Strecke unmittelbar vom Zapfenkreuz in die Gabel transferiert. Die aus Richtung der Drehachse der Gelenkwelle außen liegenden Bereiche der Gabelbohrung und des Zapfens erfahren somit keinerlei direkte Kräfte in axialer Richtung des Zapfens. Dementsprechend können die Lagerelemente des Radiallagers maximal weit nach außen verschoben oder erweitert werden. Damit kann gegenüber dem Stand der Technik ein deutlich größerer Hebelweg für die Radiallager ausgenutzt werden.

Da bei Gelenkwellen die Übertragung des Drehmoments primär über die Radiallager der Zapfen in den Gabelbohrungen erfolgt, ist dieser Aufbau besonders vorteilhaft, da hier durch den maximalen Hebelweg bei gleichem Durchmesser größere Drehmomente übertragen werden oder eine größere Lebensdauer realisiert werden kann, als bei den Ausführungen gemäß dem Stand der Technik.

Weitere vorteilhafte Ausgestaltungen der Kreuzgelenkanordnung ergeben sich aus den abhängigen Ansprüchen und aus den Ausführungsbeispielen, welche nachfolgend anhand der Darstellungen näher erläutert werden.

Dabei zeigen:
- Figur 1: eine erste Ausführungsform einer Zapfenlagerung in der erfindungsgemäßen Kreuzgelenkanordnung;
- Figur 2: eine zweite Ausführungsform einer Zapfenlagerung in der erfindungsgemäßen Kreuzgelenkanordnung; und
- Figur 3: eine dritte Ausführungsform einer Zapfenlagerung in der erfindungsgemäßen Kreuzgelenkanordnung.

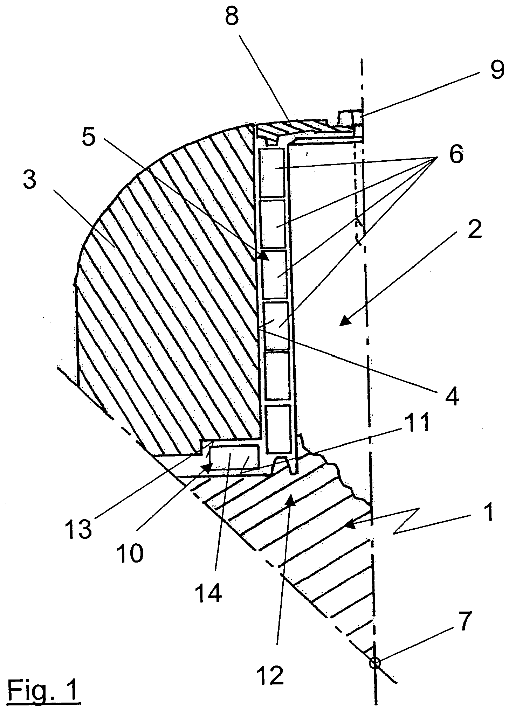

Figur 1 zeigt einen Ausschnitt aus der Kreuzgelenkanordnung, bei welchem ein Teil eines Zapfenkreuzes 1 zu erkennen ist. Ein Zapfen 2 des Zapfenkreuzes 1 ist dabei in einer Gabel 3 beziehungsweise einer Gabelbohrung 4 in der Gabel 3 dargestellt. Der Zapfen 2 ist über ein Radiallager 5 in der Gabelbohrung 4 gelagert, wobei das Radiallager 5 hier durch die Innenfläche der Lagerbohrung 4 und die Außenfläche des Zapfens 2 mit dazwischen angeordneten Wälzkörpern 6 ausgebildet ist. Das Radiallager 5 mit den Wälzkörpern 6 ist dabei nur prinzipiell angedeutet, so dass eine rein beispielhafte Darstellung der Wälzkörper 6 gewählt wurde. Typischerweise sind hier jedoch zylinderförmige Wälzkörper besonders geeignet, da hier hohe Kräfte beziehungsweise Drehmomente durch die Kreuzgelenkanordnung übertragen werden müssen. Zur Vereinfachung der Darstellung sind nur einige der Wälzkörper 6 des Radiallagers 5 mit Bezugszeichen versehen worden.

Auf der einer Drehachse 7 der Gelenkwelle abgewandten Seite ist die Gabelbohrung 4 mittels eines Deckels 8 verschlossen. Beispielhaft ist dieser Deckel 8 durch ein Befestigungsmittel 9, hier eine Schraube, mit dem Zapfen 2 verbunden, er kann aber genauso gut auch mit der Gabel 3 selbst verbunden sein. Neben diesem Radiallager 5 für den Zapfen 2 in der Gabel 3, welches die höchsten Kräfte beziehungsweise Drehmomente der Gelenkwellenanordnung überträgt, ist außerdem ein Axiallager 10 notwendig, um axiale Kräfte zwischen der Gabel 3 und dem Zapfenkreuz 1 beziehungsweise dem jeweiligen Zapfen 2 des Zapfenkreuzes 1 aufzunehmen.

Die Besonderheit in dieser Ausgestaltung besteht nun darin, dass dieses Axiallager 10 zwischen einer Anlagefläche 11 im Bereich einer Zapfenschulter 12 des jeweiligen Zapfens 2 und einem Anlagebund 13 im Bereich der Gabel 3 beziehungsweise in dem der Drehachse 7 der Gelenkwelle zugeordneten Bereich der Gabelbohrung 4 angeordnet ist. Wenn es sich dabei um ein reines Axiallager handelt, sollten die Anlagefläche 11 und die mit dem Lager korrespondierende Fläche des Anlagebundes 13 jeweils senkrecht zur Achse des jeweiligen Zapfens 2 ausgebildet sein. Wenn außerdem radiale Kraftanteil übertragen werden sollen, kann auch eine entsprechender Winkel der Flächen vorgesehen werden.

Das Axiallager 10, welches in Figur 1 durch einen Wälzkörper 14 exemplarisch als Wälzlager angedeutet ist, weist dabei gegenüber dem Stand der Technik den Vorteil auf, dass zwischen der Anlagefläche des Zapfens 2 beziehungsweise der Zapfenschulter 12 unter Krafteinleitung über den Anlagebund 13 in die Gabel 3 nur ein minimaler Bauraum liegt. Die Krafteinleitung der axialen Kräfte erfolgt somit sehr effizient auf der Innenseite der Gabel 3. Dabei steht durch die umlaufende Geometrie eine maximale Stützfläche zur Verfügung, woraus minimale Flächenpressungen resultieren. Die Außenseite der Gabelbohrung 4 in der Gabel 3 ist somit frei von direkter axialer Kraftübertragung, so dass dieser Bereich bis weit nach außen für das Radiallager 5 Verwendung finden kann. Diese große Ausdehnung des Radiallagers 5 bis in einen weit außenliegenden Bereich des Durchmessers der Gelenkwelle erlaubt einen maximalen Hebelarm zur Übertragung der Kräfte und Drehmomente durch die Zapfen 2 auf die Gabel 3 und umgekehrt. Dadurch können höhere Kräfte beziehungsweise Drehmomente übertragen werden oder es kann bei der Übertragung gleich hoher Drehmomente beziehungsweise Kräfte eine entsprechende längere Lebensdauer der Kreuzgelenkanordnung mit der erfindungsgemäßen Ausbildung des Axiallagers 10 erreicht werden.

Dabei ist es grundsätzlich möglich, das Radiallager 5 lediglich nach außen zu verschieben, oder es ist alternativ hierzu denkbar, das Radiallager 5, wie hier dargestellt, in radialer Richtung des Zapfens 2 entsprechend zu verlängern und damit die Lagerfläche entsprechend zu vergrößern.

In dem in Figur 1 dargestellten Ausführungsbeispiel sind die Lagerungen 5, 10 nur sehr prinzipmäßig und schematisch angedeutet. Die Lagerungen 5, 10 können, wie hier dargestellt, als Wälzlager ausgelegt sein, beide Lagerungen 5,10 könnten prinzipiell auch als Gleitlagerungen ausgebildet werden. Die Lagerungen 5, 10 in Figur 1 sind dabei direkt auf den jeweiligen Oberflächen der Gabelbohrung 4 beziehungsweise des Zapfens 2 beziehungsweise der Anlagefläche 11 angeordnet, es sind also keine Lagerschalen dargestellt. Prinzipiell wäre jedoch auch hier ein Lagerinnen- und/oder -außenring möglich.

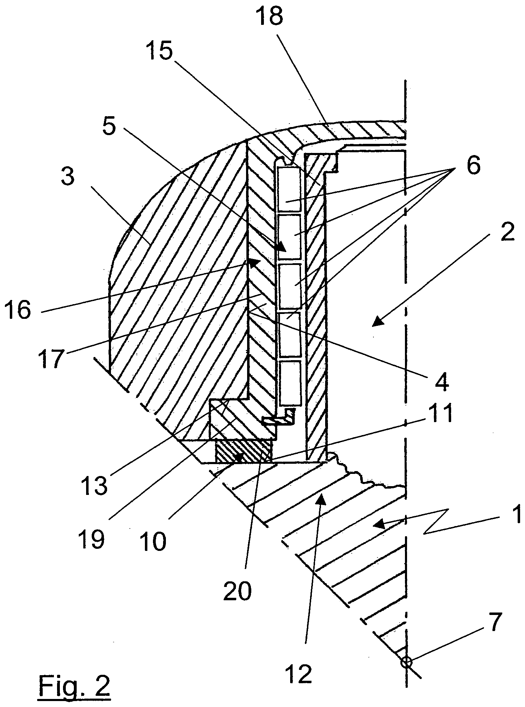

In Figur 2 ist nun ein vergleichbarer Aufbau des entsprechenden Ausschnitts der Kreuzgelenkanordnung nochmals dargestellt. Im Gegensatz zur Darstellung in Figur 1 weist das Radiallager 5 hierbei jedoch eine innere Lagerschale 15 und eine äußere Lagerschale 16 auf. Die äußere Lagerschale 16 ist dabei zwischen den Wälzkörpern 6 des Radiallagers 5 und der Gabelbohrung 4 angeordnet. Die äußere Lagerschale 16 weist mehrere Bereiche auf. Der für die Funktion wichtigste Bereich ist der eigentliche Lagerbereich 17, auf welchem die Wälzkörper 6 entsprechend laufen. Außerdem geht dieser Lagerbereich 17 an dem der Drehachse 7 der Gelenkwelle abgewandten Ende der Lagerbohrung 4 einstückig in ein Deckelelement 18 über. Zusätzlich weist die äußere Lagerschale 16 noch einen Axiallagerbereich 19 auf, welcher zwischen dem eigentlichen Axiallager 10 und dem Anlagebund 13 im Bereich der Gabel angeordnet ist. Dieser Axiallagerbereich 19 der äußeren Lagerschale 16 bildet also eine Lagerschale für das Axiallager 10.

In dem hier dargestellten Ausführungsbeispiel ist das Axiallager 10 dabei als Gleitlager ausgebildet, was hier durch einen beispielhaften Gleitlagerring 20 entsprechend angedeutet ist. Aufgrund der Tatsache, dass zur primären Übertragung der Kräfte und Drehmomente das hochbelastete Radiallager 5 dient und das Axiallager 10 eine im Vergleich hierzu untergeordnete Bedeutung spielt, ist eine Gleitlagerung für das Axiallager 10 durchaus ausreichend und bei entsprechenden Kreuzgelenkanordnungen auch weit verbreitet. Mit einer derartigen Gleitlagerung, beispielsweise aus einem Gleitlagerring 20 eines geeigneten Materials (Lagerbronze, Kunststoff oder dergleichen), kann ein einfacher und effizienter Aufbau mit einer geringen Lagerbauhöhe erzielt werden.

Auch bei dem Ausführungsbeispiel in Figur 2 ist der Abstand zwischen der Anlagefläche 11 und dem Anlagebund 13 vergleichsweise gering. Auch hier ist das Axiallager in dem der Drehachse 7 der Gelenkwelle zugewandten Bereich der Lagerbohrung 4 angeordnet, so dass der gegenüberliegende äußere Bereich der Lagerbohrung 4 bis weit nach außen für das Radiallager 5 zur Verfügung steht, um die oben bereits genannten Vorteile zu ermöglichen.

Der Aufbau der äußeren Lagerschale in der Darstellung gemäß Figur 2 erfordert einen entsprechenden Einbau des Zapfens 2 in die Lagerbohrung 4 von der der Drehachse 7 der Gelenkwelle zugewandten Seite aus. Um diese realisieren zu können, muss die Gabel 3 entsprechend geteilt ausgeführt werden. Grundsätzlich sind dabei mehrere Alternativen denkbar, welche so auch im Stand der Technik bereits bekannt sind. Entweder kann die Gabelbohrung 4 selbst geteilt werden, wie dies beispielsweise auch bei einem Pleuel üblich ist. Alternativ hierzu ist es auch denkbar, dass die Lagerbohrung 4 in entsprechende Lagerböcke eingebracht ist, welche dann mit einem Mitnehmerflansch der Gabel verschraubt werden können. Die Lagerböcke können dann entsprechend auf die Zapfen 2 aufgesteckt werden, um dann mit dem Flansch des Gabelmitnehmers verschraubt zu werden. Die dritte mögliche Ausgestaltung besteht darin, die Gabel beziehungsweise den Flansch der Gabel selbst zu teilen. Der geteilte Flansch ermöglicht es dann, die beiden Enden und damit die beiden Gabelbohrungen in axialer Richtung der beiden mit ihnen korrespondierenden Zapfen 2 entsprechend zu bewegen, so dass die Gabeln 3 auf die Zapfen aufgesteckt und dann entsprechend fixiert werden können.

Bei der Montage der Ausführungsform gemäß Figur 2 wird also der äußere Lagerring 16 , welcher zusammen mit dem Deckelelement 18 eine Art Buchse bildet, in die Gabelbohrung 4 eingeschoben beziehungsweise eingepresst. Damit kommt der Axiallagerbereich 19 der äußeren Lagerschale 16 an dem Anlagebund 13 zu liegen. Dann kann eine entsprechende Montage der Lagerelemente, insbesondere der Wälzkörper 6 und des Gleitrings 20 sowie des Zapfens 2 erfolgen.

Auf den Zapfen 2 muss zuvor noch die innere Lagerschale 15 aufgesteckt werden. Die innere Lagerschale 15 ermöglicht es, dass auch die innere Lagerung der Wälzkörper 6 auf einer entsprechenden Lagerschale 15 erfolgt. Da im Bereich dieser inneren Lagerschale 15 die konvexen Wälzkörper auf dem konvexen Oberfläche des Zapfens 2 beziehungsweise der konvexen Oberfläche der Lagerschale 15 laufen, ist in diesem Bereich die Flächenpressung und damit die Beanspruchung des Radiallagers 5 besonders hoch. Dadurch kann es vor allem im Bereich der inneren Lagerschale 15 zu einem erhöhten Verschleiß kommen. Der Aufbau gemäß Figur 2 erlaubt es nun vergleichsweise einfach, diese innere Lagerschale 15 auszutauschen, so dass eine einfache und vergleichsweise kostengünstige Wiederinstandsetzung möglich ist, sofern das Radiallager 5 an dieser Stelle verschleißen sollte.

Wird, wie in Figur 1 dargestellt, auf eine derartige innere Lagerschale verzichtet, was grundsätzlich auch beim Aufbau nach Figur 2 möglich ist, so würde hier der Zapfen 2 selbst verschleißen und müsste bei Bedarf als Ganzes ausgetauscht werden. Typischerweise wird je nach Größe der Gelenkwelle jedoch der Austausch der inneren Lagerschale 15 eine kostengünstigere Alternative darstellen.

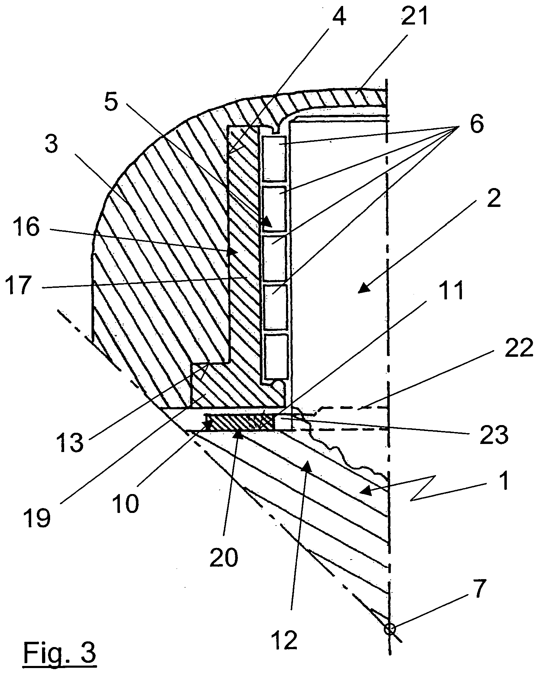

In Figur 3 ist nun eine dritte Ausführungsform des entsprechenden Ausschnitts der Kreuzgelenkanordnung gemäß der Erfindung zu erkennen. Die Gabelbohrung 4 in der Gabel 3 ist hierbei als Sackloch ausgeführt, so dass ein Deckelelement 21 in diesem Fall als Teil der Gabel 3 selbst ausgebildet ist. Vergleichbar wie bei der Ausführung gemäß Figur 2 mit der büchsenförmigen äußeren Lagerschale ist auch hier zur Montage ein Aufbau notwendig, bei welchem die Gabel 3 entsprechend geteilt werden kann. Ansonsten entspricht der Aufbau im Wesentlichen dem bereits Beschriebenen. Auch hier ist eine äußere Lagerschale 16 des Radiallagers 5 zu erkennen, auf die innere Lagerschale 15 wurde in der Ausführung gemäß Figur 3 verzichtet. Die äußere Lagerschale 16 weist wiederum den eigentlichen Lagerbereich 17 sowie den Axiallagerbereich 19 auf. Dadurch, dass das Deckelelement 21 hier einstückig mit der Gabel 3 ausgebildet ist, ist die äußere Lagerschale 16 im Wesentlichen ringförmig ausgebildet, so dass dementsprechend kein Deckelelement 18 zur äußeren Lagerschale 16 zählt.

Die zweite Besonderheit gegenüber den vorhergehenden Figuren liegt hier im Bereich des Gleitlagerrings 20 des Axiallagers 10. Dieser Gleitlagerring 20 weist tragende Bereiche 22 und dementsprechend nicht tragende Bereich 23 auf. Grundsätzlich ist diese Ausgestaltungsvariante für den Gleitlagerring 20 bereits aus dem Stand der Technik bekannt. Hierzu wird auf die eingangs genannten deutschen Anmeldungen DE 10 2005 058 742 und DE 10 2005 058 743 der Anmelderin verwiesen.

Durch die mechanische Belastung der Kreuzgelenkanordnung kommt es zu einer Relativbewegung des Zapfens 2 gegenüber der Gabelbohrung 4. Diese Relativbewegung weist dabei, wie in den beiden oben genannten Schriften näher erläutert, Bereiche auf, in denen eine vergleichsweise große Relativbewegung der Bauteile zueinander auftritt, und andere Bereiche, in denen eine eher kleine Relativbewegung der Bauteile zueinander auftritt. Nun ist der Gleitlagerring 20 der Figur 3 so ausgestaltet, dass er tragende Bereiche 22 und nicht tragende Bereiche 23 aufweist. Die tragenden Bereiche 22 sind dabei symmetrisch und örtlich begrenzt auf dem Gleitlagerring 20 angeordnet, vergleichbares gilt für die nicht tragenden Bereiche 23. Der Aufbau erreicht, dass die axiale Lagerung primär im Bereich der tragenden Bereiche 22 erfolgt. Der sich verformende Zapfen kann in den nicht tragenden Bereichen 23 eine vergleichsweise große Relativbewegung gegenüber der Gabel 3 beziehungsweise der Gabelbohrung 4 machen, bevor er im Bereich der nicht tragenden Bereiche 23 auf dem Gleitlagerring 20 aufsetzt und entsprechend getragen wird.

Ein herkömmlicher Gleitlagerring 20 vergleichbarer Dicke über seinen gesamten Durchmesser würde in den Bereichen, in denen große Relativbewegungen zueinander auftreten, sehr schnell verschleißen. Der hier dargestellte Gleitlagerring 20 wird aber in den nicht tragenden Bereichen 23 nicht oder nur minimal belastet, während in den tragenden Bereichen eine vergleichsweise gleichmäßige Belastung vorliegt. Dadurch wird der Gleitlagerring 20 als Ganzes nicht so schnell verschleißen, was der Lebensdauer bzw. der Länge der Wartungsintervalle der Kreuzgelenkanordnung an sich sehr vorteilhaft zugute kommt.

Alternativ zu dem weglassen des Materials im Bereich der nicht tragenden Bereiche 23 könnte auch ein entsprechendes elastisches Material in diese nicht tragenden Bereiche 23 eingebracht werden. Außerdem wäre es denkbar, dass die Unterteilung in tragende und nicht tragende Bereiche nicht durch die geometrische Ausgestaltung des Gleitlagerrings 20 realisiert wird, sondern durch entsprechende Ausgestaltungen in den weiteren an der Lagerung beteiligten Flächen. Beispielsweise könnte die Anlagefläche 11 so ausgebildet sein, dass sie im Bereich der tragenden Bereiche eben ausgebildet ist und im Bereich der nicht tragenden Bereiche mit Vertiefungen versehen ist. Vergleichbares gilt selbstverständlich auch für den Axiallagerbereich 19 der äußeren Lagerschale 16 oder die Fläche des Anlagebunds 13. Dabei ist es jeweils möglich, durch entsprechende Aussparungen oder mit einem elastischen Material oder elastischen Federmitteln oder dergleichen ausgefüllten Bereichen diese Unterteilung des Axiallagers 10 in tragende Bereiche 22 und nicht tragende Bereiche 23 zu realisieren. Der Gleitlagerring 20 kann dann in den Bereichen mit großer Relativbewegung der Gabelbohrung 4 gegenüber dem Zapfen 2 in diese Vertiefungen bzw. Aussparungen "ausweichen" und sich so einer hohen Belastung und hohem Verschleiß "entziehen".

Es sind jeweils die beschreiben Einzelmaßnahmen an einem der genannten Bauteile denkbar oder auch Kombinationen von Aussparungen und/oder elastischen Mitteln an mehreren der genannten in die Axiallagerung 10 involvierten Bauteile.

Die anhand der drei Figuren näher dargestellten Varianten der Erfindung haben im Kern den kurzen Weg zwischen der Anlage des Axiallagers 10 und der Krafteinleitung in die Gabel 3 gemeinsam. Dies wird auf verschiedene Arten mit oder ohne Lagerschale, mit Wälzlagern 14 für die Axiallagerung 10 oder einer Gleitlagerung 20 für die Axiallagerung 10 erreicht. Diese Varianten sind dabei durch den Fachmann untereinander problemlos zu kombinieren. Vergleichbares gilt auch für die Ausgestaltung der Lagerbohrung beziehungsweise des Deckelelementes 18, 21. So wäre beispielsweise der innere Lagerring 15 in allen drei Varianten einsetzbar, es wäre auch denkbar, dass die äußere Lagerschale 16 in einer büchsenartigen Ausgestaltung gemäß Figur 2 ohne die innere Lagerschale realisiert wird, oder dass diese mit dem Gleitlagerring 20 der Figur 3 oder auch den Wälzlagerelementen der Figur 1 entsprechend kombiniert wird. Der Aufbau und die Gestaltung der äußeren Lagerschale 16 könnte selbstverständlich auch ohne einen entsprechenden Axiallagerbereich 19 realisiert werden und könnte somit in den Aufbau gemäß der Figur 1 entsprechend integriert werden. Auch ist für alle Varianten entweder eine Sacklochbohrung als Gabelbohrung 4 oder die Verwendung eines eigenen Deckels 8 ebenso denkbar, wie die einstückige Ausbildung des Deckels mit der äußeren Lagerschale 16.

Die Lagerung des Zapfens 2 in der Gabelbohrung 4 kann je nach Ausgestaltung außerdem über ein oder mehrere Dichtungsmittel verfügen. Derartige Dichtungsmittel sind für Kreuzgabelanordnungen grundsätzlich aus dem Stand der Technik bekannt, so dass diese in den Figuren nicht näher dargestellt sind. Je nach Ausführung der Gabelbohrung 4 als Sacklochbohrung oder mit Deckel 8 beziehungsweise einem einstückig mit der äußeren Lagerschale 16 ausgebildeten Deckelelement 18 sind entsprechende Abdichtungen im Bereich der Gabelbohrung 4 und/oder insbesondere im Bereich der Zapfenschulter 12 vorzusehen. Derartige Abdichtungsmaßnahmen sind für einen Fachmann der Lagerungstechnik entsprechend selbstverständlich und geläufig, so dass hierauf nicht näher eingegangen wird und so dass auf eine Darstellung in den Figuren 1 bis 3 verzichtet wurde.

## Patentansprüche

1. Kreuzgelenkanordnung für eine Gelenkwelle, insbesondere eine Schwerlastgelenkwelle, mit:
1.1 einem Zapfenkreuz (1);
1.2 zwei Gelenkgabeln (3) mit Gabelbohrungen (4) zur Aufnahme jeweils eines Zapfens (2) des Zapfenkreuzes (1);
1.3 jeweils einer Lagervorrichtung des Zapfens in der Gabelbohrung; wobei
1.4 die Lagervorrichtung wenigstens ein Axiallager (10) und wenigstens ein Radiallager (5) für den Zapfen (2) aufweist; und wobei
1.5 das Axiallager (10) im Bereich der Zapfenschulter (12) angeordnet ist;
**dadurch gekennzeichnet, dass**
1.6 die Gabelbohrung (4) an ihrer einer Drehachse (7) der Gelenkwelle zugewandten Seite einen Anlagebund (13) aufweist;
1.7 die Zapfenschulter (12) eine Anlagefläche (11) aufweist; und
1.8 das Axiallager (10) zwischen Anlagefläche (11) und Anlagebund (13) angeordnet ist.

2. Kreuzgelenkanordnung nach Anspruch 1, **dadurch gekennzeichnet, dass** das Radiallager (5) aus Wälzkörpern (6) und einer äußeren, zwischen Wälzkörpern (6) und Gabelbohrung (4) angeordneten Lagerschale (16) ausgebildet ist.

3. Kreuzgelenkanordnung nach Anspruch 1 oder 2, **dadurch gekennzeichnet, dass** das Radiallager (5) eine innere Lagerschale (15) zwischen den Wälzkörpern (6) und dem Zapfen (2) aufweist.

4. Kreuzgelenkanordnung nach Anspruch 1, 2 oder 3, **dadurch gekennzeichnet, dass** die das Axiallager (5) abstützenden Fläche des Anlagebundes zur Achse des jeweiligen Zapfens (2) senkrecht ausgebildet ist.

5. Kreuzgelenkanordnung nach Anspruch 1, 2 oder 3, **dadurch gekennzeichnet, dass** die Anlagefläche (11) im Bereich der Zapfenschulter (12) zur Achse des jeweiligen Zapfens (2) senkrecht ausgebildet ist.

6. Kreuzgelenkanordnung nach einem der Ansprüche 1 bis 5, **dadurch gekennzeichnet, dass** das Axiallager (10) als Gleitlagerring (20) ausgeführt ist.

7. Kreuzgelenkanordnung nach einem der Ansprüche 1 bis 5, **dadurch gekennzeichnet, dass** das Axiallager (10) durch zwischen dem Anlagebund (13) und der Anlagefläche (11) angeordnete Wälzkörper (14) ausgebildet ist.

8. Kreuzgelenkanordnung nach einem der Ansprüche 1 bis 7, **dadurch gekennzeichnet, dass** das Axiallager (10) wenigstens eine Lagerschale (19) aufweist.

9. Kreuzgelenkanordnung nach Anspruch 8, **dadurch gekennzeichnet, dass** die wenigstens eine Lagerschale (19) des Axiallagers (10) als Teil der äußeren Lagerschale (16) des Radiallagers ausgebildet ist, wobei sich die Lagerschale (16) an dem Anlagebund (13) abstützt.

10. Kreuzgelenkanordnung nach einem der Ansprüche 1 bis 9, **dadurch gekennzeichnet, dass** die Gabelbohrung (4) auf ihrer der Drehachse (7) der Gelenkwelle abgewandten Seite mit einem Deckel (8, 18, 21) verschlossen ist.

11. Kreuzgelenkanordnung nach Anspruch 10, **dadurch gekennzeichnet, dass** der Deckel (18) und die äußere Lagerschale (16) des Radiallagers (5) einstückig ausgebildet sind.

12. Kreuzgelenkanordnung nach einem der Ansprüche 1 bis 9, **dadurch gekennzeichnet, dass** die Gabelbohrung (4) als Sackloch von der der Drehachse (7) der Gelenkwelle zugewandten Seite her ausgebildet ist.

13. Kreuzgelenkanordnung nach einem der Ansprüche 1 bis 12, **dadurch gekennzeichnet, dass** das Axiallager (10) so ausgebildet ist, dass es im Bereich des Gleitlagerrings (20) und/oder der wenigstens einen Lagerschale (19) und/oder der Anlagefläche (11) und/oder des Anlagebundes (13) symmetrisch gegenüberliegend angeordnete, örtlich begrenzte, tragende Bereiche (22) aufweist.

14. Kreuzgelenkanordnung nach Anspruch 13, **dadurch gekennzeichnet, dass** die tragenden Bereiche (22) in Einbaulage des Axiallagers (10) im Bereich geringer Relativbewegungen zwischen den Zapfen (2) und den Gabelbohrungen (4) angeordnet sind.

15. Kreuzgelenkanordnung nach Anspruch 13 oder 14, **dadurch gekennzeichnet, dass** das Axiallager (10) in den Bereichen (23), in denen es keine tragenden Bereiche (22) aufweist, im Bereich des Gleitlagerrings (20) und/oder der wenigstens einen Lagerschale (19) und/oder der Anlagefläche (11) und/oder des Anlagebundes (13) Ausnehmungen und/oder elastische Mittel aufweist.

16. Kreuzgelenkanordnung nach einem der Ansprüche 1 bis 15, **dadurch gekennzeichnet, dass** Dichtungsmittel zur Abdichtung der Lager (10, 5), zumindest des Radiallagers (5), vorgesehen sind.

## Claims

1. A universal joint arrangement for an articulated shaft, especially a heavy-duty articulated shaft, comprising:
1.1 a journal cross (1);
1.2 two joint forks (3) having fork holes (4) for respectively accommodating a journal (2) of the journal cross (1);
1.3 a respective bearing device of the journal in the fork hole, wherein
1.4 the bearing device comprises at least one axial bearing (10) and at least one radial bearing (5) for the journal (2), and wherein
1.5 the axial bearing (10) is arranged in the region of the journal shoulder (12),
**characterized in that**
1.6 the fork hole (4) comprises a contact collar (13) on its side facing a rotational axis (7) of the articulated shaft;
1.7 the journal shoulder (12) comprises a contact surface (11), and
1.8 the axial bearing (10) is arranged between the contact surface (11) and the contact collar (13).

2. A universal joint arrangement according to claim 1, **characterized in that** the radial bearing (5) is formed from rolling bodies (6) and an outer bearing shell (16) which is arranged between the rolling bodies (6) and the fork hole (4).

3. A universal joint arrangement according to claim 1 or 2, **characterized in that** the radial bearing (5) comprises an inner bearing shell (15) between the rolling bodies (6) and the journal (2).

4. A universal joint arrangement according to claim 1, 2 or 3, **characterized in that** the surface of the contact collar which supports the axial bearing (5) is formed in a perpendicular manner in relation to the axis of the respective journal (2).

5. A universal joint arrangement according to claim 1, 2 or 3, **characterized in that** the contact surface (11) is formed perpendicularly to the axis of the respective journal (2) in the region of the journal shoulder (12).

6. A universal joint arrangement according to one of the claims 1 to 5, **characterized in that** the axial bearing (10) is formed as a plain bearing ring (20).

7. A universal joint arrangement according to one of the claims 1 to 5, **characterized in that** the axial bearing (10) is formed by rolling bodies (14) arranged between the contact collar (13) and the contact surface (11).

8. A universal joint arrangement according to one of the claims 1 to 7, **characterized in that** the axial bearing (10) comprises at least one bearing shell (19).

9. A universal joint arrangement according to claim 8, **characterized in that** the at least one bearing shell (19) of the axial bearing (10) is formed as a part of the outer bearing shell (16) of the radial bearing, wherein the bearing shell (16) is supported on the contact collar (13).

10. A universal joint arrangement according to one of the claims 1 to 9, **characterized in that** the fork hole (4) is sealed with a cover (8, 18, 21) on its side facing the rotational axis (7) of the articulated shaft.

11. A universal joint arrangement according to claim 10, **characterized in that** the cover (18) and the outer bearing shell (16) of the radial bearing (5) are formed in an integral manner.

12. A universal joint arrangement according to one of the claims 1 to 9, **characterized in that** the fork hole (4) is formed as a pocket hole from the side facing the rotational axis (7) of the articulated shaft.

13. A universal joint arrangement according to one of the claims 1 to 12, **characterized in that** the axial bearing (10) is formed in such a way that it comprises supporting regions (22), which are arranged in a symmetrically opposite manner and are locally bounded, in the region of the plain bearing ring (20) and/or the at least one bearing shell (19) and/or the contact surface (11) and/or the contact collar (13).

14. A universal joint arrangement according to claim 13, **characterized in that** the supporting regions (22) are arranged in the installation position of the axial bearing (10) in the region of low relative movements between the journal (2) and the fork holes (4).

15. A universal joint arrangement according to claim 13 or 14, **characterized in that** the axial bearing (10), in the regions (23) in which it does not comprise any supporting regions (22), comprises recesses and/or elastic means in the region of the plain bearing ring (20) and/or the at least one bearing shell (19) and/or the contact surface (11) and/or contact collar (13).

16. A universal joint arrangement according to one of the claims 1 to 15, **characterized in that** sealing means for sealing the bearings (10, 5), at least the radial bearing (5), are provided.

## Revendications

1. Disposition de joint de Cardan pour un arbre à joint de Cardan, en particulier un arbre à joint de Cardan pour charges lourdes, avec :
1.1 un croisillon (1) ;
1.2 deux fourches d'articulation (3) avec des alésages de fourche (4) destinés à recevoir chacun un tourillon (2) du croisillon (1) ;
1.3 un dispositif d'appui de chaque tourillon dans l'alésage de fourche,
1.4 le dispositif d'appui comprenant au moins un palier axial (10) et au moins un palier radial (5) pour le tourillon (2) et
1.5 le palier axial (10) étant disposé au niveau de l'épaulement de tourillon (12) ;
**caractérisée en ce que**
1.6 l'alésage de fourche (4) présente un collet d'appui (13) sur son côté orienté vers l'axe de rotation (7) de l'arbre à joint de Cardan ;
1.7 l'épaulement de tourillon (12) présente une surface d'appui (11) ; et
1.8 le palier axial (10) est disposé entre la surface d'appui (11) et le collet d'appui (13).

2. Disposition de joint de Cardan selon la revendication 1, **caractérisée en ce que** le palier radial (5) est formé de roulements (6) et d'une coquille de coussinet extérieure (16) disposée entre les roulements (6) et l'alésage de fourche (4).

3. Disposition de joint de Cardan selon la revendication 1 ou 2, **caractérisée en ce que** le palier radial (5) présente une coquille de coussinet intérieure (15) entre les roulements (6) et le tourillon (2).

4. Disposition de joint de Cardan selon la revendication 1, 2 ou 3, **caractérisée en ce que** la surface du collet d'appui soutenant le palier axial (5) est perpendiculaire à l'axe du tourillon (2) correspondant.

5. Disposition de joint de Cardan selon la revendication 1, 2 ou 3, **caractérisée en ce que** la surface d'appui (11) est perpendiculaire à l'axe du tourillon (2) correspondant au niveau de l'épaulement de tourillon (12).

6. Disposition de joint de Cardan selon l'une des revendications 1 à 5, **caractérisée en ce que** le palier axial (10) est conformé comme une bague de coussinet lisse (20).

7. Disposition de joint de Cardan selon l'une des revendications 1 à 5, **caractérisée en ce que** le palier axial (10) est formé par des roulements (14) disposés entre le collet d'appui (13) et la surface d'appui (11).

8. Disposition de joint de Cardan selon l'une des revendications 1 à 7, **caractérisée en ce que** le palier axial (10) présente au moins une coquille de coussinet (19).

9. Disposition de joint de Cardan selon la revendication 8, **caractérisée en ce que** l'au moins une coquille de coussinet (19) du palier axial (10) est réalisée comme une partie de la coquille de coussinet extérieure (16) du palier radial, laquelle coquille de coussinet (16) s'appuie sur le collet d'appui (13).

10. Disposition de joint de Cardan selon l'une des revendications 1 à 9, **caractérisée en ce que** l'alésage de fourche (4) est fermé par un couvercle (8, 18, 21) sur son côté orienté à l'opposé de l'axe de rotation (7) de l'arbre à joint de Cardan.

11. Disposition de joint de Cardan selon la revendication 10, **caractérisée en ce que** le couvercle (18) et la coquille de coussinet extérieure (16) du palier radial (5) sont formés d'une pièce.

12. Disposition de joint de Cardan selon l'une des revendications 1 à 9, **caractérisée en ce que** l'alésage de fourche (4) est conformé comme un trou borgne partant du côté orienté vers l'axe de rotation (7) de l'arbre à joint de Cardan.

13. Disposition de joint de Cardan selon l'une des revendications 1 à 12, **caractérisée en ce que** le palier axial (10) est conformé de telle façon qu'il présente au niveau de la bague de coussinet lisse (20) et/ou de l'au moins une coquille de coussinet (19) et/ou de la surface d'appui (11) et/ou du collet d'appui (13) des zones portantes (22) limitées localement et disposées face à face de façon symétrique.

14. Disposition de joint de Cardan selon la revendication 13, **caractérisée en ce que** les zones portantes (22) sont disposées, dans la position de montage du palier axial (10), dans la zone de mouvements relatifs réduits entre les tourillons (2) et les alésages de fourche (4).

15. Disposition de joint de Cardan selon la revendication 13 ou 14, **caractérisée en ce que** le palier axial (10) présente des creux et/ou des moyens élastiques dans les zones (23) dans lesquelles il ne présente pas de zones portantes (22), au niveau de la bague de coussinet lisse (20) et/ou de l'au moins une coquille de coussinet (19) et/ou de la surface d'appui (11) et/ou du collet d'appui (13).

16. Disposition de joint de Cardan selon l'une des revendications 1 à 15, **caractérisée en ce que** des moyens d'étanchéité sont prévus pour l'étanchéité des paliers (10, 5), et au minimum du palier radial (5).
